# EUROPÄISCHE PATENTSCHRIFT

(11) **EP 2 848 830 B1**
(45) Veröffentlichungstag und Bekanntmachung des Hinweises auf die Patenterteilung: **15.06.2016**
(21) Anmeldenummer: 13183999.5
(22) Anmeldetag: 11.09.2013
(51) Int. Cl.: F16C 11/10, B23K 37/02, F16M 11/20, B23K 9/28, B23K 9/29, B23K 9/173

(54) **Halterung für eine Schweißpistole zum Anschluss an einen Arm eines Schweißroboters und Gelenk für eine solche Halterung**
Mounting for a welding gun for connection to an arm of a welding robot and articulation for such a mounting
Support pour un pistolet à souder destiné à être raccordé à un bras d'un robot de soudage et articulation pour un tel support

(43) Veröffentlichungstag der Anmeldung: 18.03.2015
(73) Patentinhaber: Dinse G.m.b.H., 22419 Hamburg (DE)
(72) Erfinder: Lütgenau, Albert, 24558 Henstedt-Ulzburg (DE)
(74) Vertreter: Raffay & Fleck

(56) Entgegenhaltungen:
- DE-C- 640 486
- DE-U1- 20 321 339
- DE-U1-202006 007 733
- JP-A- H03 226 378
- US-A- 1 847 937
- US-A1- 2006 225 248

## Beschreibung

Die vorliegende Erfindung betrifft ein um eine Schwenkachse verschwenkbares, in einer Schwenkposition feststellbares, zwischen zwei starren Elementen ausgebildetes Gelenk für eine Halterung für eine Schweißpistole zum Anschluss an einen Arm eines Schweißroboters mit den Merkmalen des Oberbegriffs des Patentanspruches 1. Sie betrifft ferner eine Halterung für eine Schweißpistole mit einem solchen Gelenk.

In der modernen Massenfertigung werden für Fügevorgänge von insbesondere metallischen Werkstücken häufig Schweißautomaten bzw. Schweißroboter eingesetzt, insbesondere solche für das MIG-Schweißen bzw. MAG-Schweißen. Hierbei kommen Mehrachsroboter mit entsprechend um Bewegungsachsen beweglich ausgeführten Roboterarmen zum Einsatz, an deren Enden Schweißpistolen (auch als Schweißbrenner bezeichnet) befestigt sind. Dabei sind die Schweißpistolen an dem jeweiligen Roboterarm typischerweise über eine Halterung festgelegt, die mit einem ersten Anschlussende an einem Befestigungsanschluss des Roboterarmes festgelegt sind und mit einem zweiten Anschlussende mit der Schweißpistole lösbar verbunden sind. Diese Halterungen dienen einmal der einfachen austauschbaren Festlegung der Schweißpistole, die in der Regel häufiger auszutauschen ist, sei es um anders geformte Schweißpistolen anzuordnen, wenn der Schweißroboter in einem umgestellten Fertigungsprozess verwendet wird, oder sei es um eine verschlissene Schweißpistole gegen eine neue zu ersetzen. Entsprechende Halterungen für Schweißpistolen sind z.B. gezeigt in den japanischen Veröffentlichungen JP 2005324250 A und JP 2009-142922 A.

Neben der leicht auszuführenden auswechselbaren Befestigung der Schweißpistole an dem Roboterarm dienen derartige Halterungen regelmäßig noch weiteren Zwecken. Zum einen sind die Halterungen so geformt und geführt, dass eine Anordnung der Schweißpistole derart möglich ist, dass mit ihr auch teilweise verdeckt zu setzende Schweißpunkte an einem Werkstück gesetzt, die entsprechenden Positionen auf dem Werkstück mit der Schweißspitze der Schweißpistole angefahren werden können. Zum anderen kann an der Halterung ein Abschaltmechanismus für eine Notabschaltung des Schweißroboters bei einem unbeabsichtigten Anfahren des Werkstückes, d.h. bei einer Kollision zwischen der Schweißpistole und dem Werkstück, angeordnet sein. Die Halterung kann darüber hinaus eine Führung für ein mit der Schweißpistole zu verbindendes Schlauchpaket, das die Leitungen für zuzuführende Schweißmedien, wie Strom, Gas, Kühlmedium und den Schweißdraht, enthält, mit umfassen.

Ein wesentlicher Aspekt bei der Gestaltung der Halterung ist die Präzision, mit der die Schweißspitze der Schweißpistole im Raum orientiert ist und in einem definierten Verhältnis dem TCP (Tool Center Point) entspricht bzw. dessen Lage vorgibt. Insbesondere dann, wenn Schweißpistolen auszutauschen sind, stellt sich hier eine Herausforderung, da anders geformte Schweißpistolen andere TCP mit sich bringen und häufig die Schweißpistolen nicht so exakt gefertigt sind, dass bei einem Austausch einer Schweißpistole gegen eine neue Schweißpistole grundsätzlich gleicher Bauart, sich nicht dennoch eine leichte Verschiebung des TCP ergeben kann. Eine nicht präzise Lage des TCP bedeutet aber in der automatisierten Schweißung eine Abweichung der Lage der gesetzten Schweißpunkte, was in der Fertigung zu Problemen und zu Ausschuss führen kann.

Entsprechend gibt es am Markt Lösungen, bei denen die Halterungen nicht aus starr zueinander ausgerichteten, häufig strebenförmig gebildeten, Elementen zusammengefügt sind, sondern bei denen zumindest ein, häufig sogar mehrere Schwenkgelenke vorgesehen sind, um die einzelne starre Elemente der Halterung relativ zueinander verschwenkt werden können, um so eine Ausrichtung der in der Halterung aufgenommenen Schweißpistole vornehmen und den TCP entsprechend einstellen zu können. Diese Gelenke müssen nach erfolgter Einstellung zuverlässig in ihrer Schwenklage fixiert werden. Eine derartige Halterung für eine Schweißpistole mit einem - im Vergleich zu dem nachfolgend beschriebenen erfindungsgemäßen Gelenk vollkommen anders gestalteten Gelenk - ist in der DE 20 2006 007 733 U1 offenbart. Die DE 640 486 C offenbart ein selbsttätiges Bremsscharnier für Türen, Fenster oder dergleichen, welches aber weder dem Aufbau des nachstehen beschriebenen erfindungsgemäßen Gelenks gleicht, noch für eine Verwendung in einer Halterung für eine Schweißpistole vorgeschlagen wird noch geeignet erscheint.

Hier besteht denn auch das Problem: Bei den bisher angedachten Lösungen ist das Festlegen entsprechender Gelenke aufwendig und häufig nicht ausreichend zuverlässig möglich. Dementsprechend sind am Markt häufig auch noch anstelle von mit entsprechenden Gelenken ausgestatteten Halterungen solche vertreten und verbreitet, die modular aus einzelnen Strebenelementen aufgebaut sind, wobei für eine Veränderung des Aufbaus, z.B. durch einen Austausch der Schweißpistole, entsprechend einzelne der modular miteinander verbundenen, jedoch in ihrer Lage präzise vorgegebenen Elemente ausgetauscht werden, gegen spezifisch für einen Aufbau mit dem jeweiligen Schweißbrenner gestaltete Elemente. Neben einem Aufwand, der bei einem entsprechenden Austausch zu betreiben ist, bedingen diese Lösungen einen hohen Bedarf in der Lagerhaltung aufgrund der Bevorratung der unterschiedlichen Komponenten der modular aufgebauten Halterungen für die verschiedenen Einsatzzwecke, bedingen außerdem entsprechend kostspielige Halterungen, insbesondere wenn hier verschiedene Einzelmodule bevorratet werden müssen, um unterschiedliche Haltegeometrien ausbilden bzw. aufbauen zu können.

Hier soll mit der Erfindung angesetzt und eine entsprechende Vereinfachung für derartige Gelenke und Halterungen geschaffen werden. Insbesondere soll ein um eine Schwenkachse verschwenkbares und feststellbares Gelenk für eine Halterung für Schweißpistolen derart weitergebildet werden, dass dieses einfach aufgebaut ist und zuverlässig und mit einfachen Mitteln arretiert und ebenso zuverlässig und einfach wieder gelöst werden kann für ein Umgestalten einer mit dem Gelenk versehenen Halterung durch Einstellen einer veränderten Schwenkposition.

Diese Aufgabe löst die Erfindung mit einem um eine Schwenkachse verschwenkbaren, in einer Schwenkposition feststellbaren Gelenk für eine Halterung für eine Schweißpistole zum Anschluss an einen Arm eines Schweißroboters mit den Merkmalen des Anspruches 1. Vorteilhafte Weiterbildungen eines solchen Gelenks sind in den abhängigen Ansprüchen 2 bis 10 näher bezeichnet. Weiterhin besteht eine Lösung dieser Aufgabe auch in einer Halterung für eine Schweißpistole mit einem solchen Gelenk (s. Anspruch 11).

Das Besondere an dem erfindungsgemäßen Gelenk für eine Halterung für eine Schweißpistole ist neben dem Umstand, dass es um eine erste Schwenkachse verschwenkbar und in einer Schwenkposition feststellbar ist, die weitere Gestaltung dieses Gelenkes. Das Gelenk ist nämlich besonders einfach gebildet und zugleich auf einfache Art und Weise, dabei zuverlässig, festzustellen und zu lösen. Erfindungsgemäß weist das Gelenk eine an einem ersten starren Element der Halterung festgelegte Hülse auf, die mit einem ersten freien Ende in einer Bohrung in einem zweiten starren Element des Gelenkes liegt. Innendurchmesser der Bohrung und Außendurchmesser der Hülse sind dabei so beschaffen, dass eine Verdrehbarkeit der Hülse in der Bohrung und damit ein Verschwenken der beiden starren Elemente relativ zueinander ermöglicht ist. Dabei sind mit Vorteil der Innendurchmesser der Bohrung und der Außendurchmesser der Hülse allerdings auch so aufeinander abgestimmt, dass diese kein wesentliches Spiel für Bewegungen quer zu der Längsachse der Hülse und damit der Schwenkachse des Gelenkes erlauben. Hülse und Bohrung sind mithin mit Vorteil auf Passung gearbeitet. Diese Gestaltung gibt zunächst einmal eine sehr einfache Ausbildung eines Gelenkes vor, bei dem die Hülse nach Art einer Gelenkwelle die Schwenkachse definiert.

Weiterhin ist durch die besondere Gestaltung mit einer Hülse und einem Spreizelement, welches in der Hülse längsverschieblich gelagert ist, ein einfaches Feststellen des Gelenkes möglich. Hierzu wird nämlich das Spreizelement mit einer durch die zentrale Öffnung desselben geführten, in das Innengewinde eines Widerlagerelements eingreifenden Spannschraube in Richtung dieses Widerlagerelements gezogen und spreizt so die Hülse und führt zu einer Presspassung und damit zu einer Umfangsverklemmung bzw. einem reibschlüssigen Festsetzen des Gelenkes.

Das Spreizelement kann z.B. eine konisch geformte Umfangsfläche aufweisen, welche mit dem verjüngtes Ende in das Innere der Hülse weist. Die Öffnung im Inneren der Hülse, die den Sitz des Spreizelementes definiert, kann entsprechend korrespondierend konisch gebildet sein, so dass hier ein Zusammenwirken gegeben ist zum Spreizen der Hülse. Um ein Spreizen der Hülse an dem freien Ende zu erleichtern, können dort Längsschlitze (ggf. nur ein solcher) vorgesehen sein.

Diese Art der Ausgestaltung des Gelenkes erlaubt zunächst einmal ein Festlegen des Gelenkes in einem beliebig eingestellten Gelenkwinkel. Anders als z.B. für ein Festlegen einer gelenkigen Verbindung bekannte, ineinander greifende auf Kontaktflächen beteiligter Gelenkelemente ausgebildete Verzahnungen dies tun, die jeweils nur eine Winkelverstellung um ein Zahnmaß gestatten, kann das Gelenk der erfindungsgemäßen Halterung beliebig durch Verdrehen der Hülse in der Bohrung eingestellt und dann durch entsprechendes Spreizen der Hülse und Ausbilden einer Flächenpressung zuverlässig festgelegt werden.

Um zu verhindern, dass das Gelenk aus seiner einmal eingenommenen Relativposition und Schwenkstellung nicht mehr gelöst werden kann, dass also das Spreizelement sich nicht mehr in der Hülse zurückbewegen lässt, ist erfindungsgemäß ein Anschlag vorgesehen, mit dem ein Lösemittel zusammenwirkt, um so eine Spreizung der Hülse aufzuheben und damit die Umfangsverklemmung zu lösen. Dies kann insbesondere dadurch geschehen, dass mit dem Lösemittel und aufgrund dessen Zusammenwirken mit dem Anschlag das Spreizelement in einer Richtung verschoben wird, in der aus einer die Hülse spreizenden Stellung herausbewegt wird.

Das Widerlagerelement kann als ein erster Längsabschnitt der Hülse in deren Inneren gebildet sein, der einen Gegenüber dem Innendurchmesser der Hülse verringerte Innendurchmesser und darin das Innengewinde aufweist.

Dabei kann dann zum Lösen mittels Lösemittel und Anschlag der Anschlag in einem Abschnitt zwischen der Hülsenwand und dem Innengewinde an der dem Spreizelement zugewandten Stirnseite des ersten Längsabschnitts gebildet sein und kann in der zentralen Öffnung des Spreizelements ein weiteres Innengewinde ausgebildet sein, welches im Durchmesser größer ist als das Innengewinde in dem Längsabschnitt der Hülse, in welches die Spannschraube eingreift, mit der das Spreizelement in das Hülseninnere gezogen bzw. gedrückt werden kann. Zum Lösen der Gelenkstellung kann dann nämlich einfach die Spannschraube, mit der das Spreizelement in die Hülse hineingezogen worden ist, vollständig entfernt werden. Löst sich dabei (was häufig der Fall sein wird) das Spreizelement noch nicht aus seiner die Hülse spreizenden und das Gelenk verklemmenden Stellung, so wird nun als Lösemittel eine entsprechend dem Innendurchmesser des Gewindes in der zentralen Öffnung des Spreizelementes gebildete Löseschraube mit größerem Außendurchmesser in dieses Innengewinde eingeschraubt, bis sich diese mit einem vorderen Ende an dem Anschlag abstützt. Dies geschieht, da die Löseschraube einen größeren Außendurchmesser und auch Gewindedurchmesser aufweist als der Innendurchmesser des Innengewindes des ersten Längsabschnittes. Durch ein weiteres Eindrehen der Löseschraube, die sich an dem ersten Anschlag abstützt, in die zentrale Öffnung des Spreizelements wird letzteres nun in Richtung des offenen freien Endes der Hülse gezwungen aus seiner ein Spreizen der Hülse und damit die Flächenpressung bewirkenden Stellung hinaus, so dass die Hülse wieder in eine Normalposition zurückfindet, das Gelenk zuverlässig entriegelt ist.

Alternativ ist es auch möglich, den Anschlag als einen auf einer der Stirnseite des Spannelements, an der der Schraubenkopf anliegt, gegenüberliegenden Stirnseite des Spreizelements um den Schaft der Spannschraube herum geführten Absatz mit vergrößertem Durchmesser auszubilden, so dass die Spannschraube selbst das Lösemittel darstellt, indem bei einem Herausschraubend er Spannschraube aus dem Widerlager der Absatz an dem Spreizelement anschlägt, und so beim weiteren Lösen der Spannschraube zwischen Widerlagerelement und Spreizelement eine diese auseinander zwingende Kraft aufgebracht wird, die letztlich zum Lösen der Klemmung führt.

Die einen wesentlichen Bestandteil des Gelenkes bildende Hülse kann dabei an dem ersten starren Element des Gelenkes fest angeformt sein, z.B. einstückig oder daran verschweißt, sie kann aber auch als durchgehende Hülse und prinzipiell loses Element des Gelenkes gebildet und die beiden starren Elemente verbindend durch entsprechende Bohrungen in beiden Elementen geführt sein. Dann ergibt sich eine der Ausgestaltungen wie sie in Anspruch 3 bzw. 6 bezeichnet sind, wobei dabei entsprechende Spreizelementen in die einander gegenüberliegenden freien Enden der Hülse eingeführt und darin mit einer entsprechenden Verschraubung in den Längsabschnitten der Hülse bzw. in das als Widerlagerelement dienenden zweiten Spreizelement auf die Hülsenmitte zu verspannbar sind, so dass die Hülse durch entsprechendes Spreizen in beiden Bohrungen der beteiligten starren Elemente verklemmt und festgelegt ist.

In dieser Ausgestaltung können dann in beiden Spreizelementen entsprechende zentrale Öffnungen mit Innengewinden vorgesehen sein, deren Durchmesser größer sind als die Innengewinde in den Längsabschnitten, so dass beide Spreizelemente in der wie oben beschriebenen Weise nach einem Herausschrauben der Spannschrauben durch Einschrauben von Löseschrauben, die sich an den Längsabschnitten gebildeten Anschlägen abstützen, aus ihrer Klemmposition gelöst werden können und so das Gelenk freigeben mit einer Verdrehmöglichkeit beider starrer Elemente relativ zu der Hülse.

Insbesondere kann die Hülse, wenn die Widerlager durch einen zentralen Abschnitt gebildet sind, dann einen durchgehenden zentralen Abschnitt aufweisen, in dem eine durchgehende Öffnung mit einem durchgehenden Innengewinde angeordnet ist, in welches von beiden Seiten her die Spannschrauben eingreifen. Mit besonderem Vorteil kann die Hülse dabei dann symmetrisch zu einer Mittelebene, die senkrecht auf der Längsachse steht, gebildet sein.

Mit einer Ausbildung der Hülse mit zwei Spreizelementen, von denen eines das Widerlager ist, also das Innengewinde aufweist, in das die Spannschraube eingreift, kann eine sichere Verriegelung des Gelenks auch mit nur einer Spannschraube erfolgen, insbesondere da durch eine schwimmende Lagerung der beiden Spreizkörper diese mit gleichmäßiger Kraftverteilung aufeinander zu gezogen werden, sich diese Kraftverteilung beim Festziehen der Spannschraube von allein einstellt.

Auch bei der beschriebenen Lösung mit einem der Spreizelemente als Widerlagerelement kann in dem anderen Spreizelement, das nicht als Widerlagerelement dient, die zentrale Öffnung ein Innengewinde größeren Durchmessers aufweisen, in das eine Löseschraube eingeschraubt werden kann, die sich dann an der den Anschlag bildenden Stirnseite des als Widerlagerelement dienenden Spreizelements abstützt. Bevorzugt wird hier aber wegen des einfacheren Handlings eine Lösung mit einem wie oben beschriebenen Absatz auf dem Schaft der Spannschraube.

Wie bereits vorstehend ausgeführt ist eine weitere Lösung der Aufgabe in einer mit einem erfindungsgemäßen Gelenk versehenen Halterung zu sehen.

Weitere Vorteile und Merkmale der Erfindung ergeben sich aus der nachfolgenden Beschreibung von Ausführungsbeispielen anhand der beigefügten Figuren. Dabei zeigen:
- Fig. 1: in einer dreidimensionalen Ansicht einen erfindungsgemäßen Halter mit darin enthaltenen erfindungsgemäß gebildeten Gelenken einer darin aufgenommenen Schweißpistole in einem möglichen Ausführungsbeispiel;
- Fig. 2: die Anordnung nach Fig. 1 in einer Seitenansicht;
- Fig. 3: das in den Figuren 1 und 2 dargestellte Ausführungsbeispiel eines erfindungsgemäßen Halters mit darin enthaltenen erfindungsgemäß gebildeten Gelenken ohne Schweißpistole;
- Fig. 4: in einer geschnittenen Ausschnittdarstellung die Anordnung nach Fig. 1, wobei ein Längsschnitt durch eines der erfindungsgemäß gebildeten Gelenke gezeigt ist;
- Fig. 5: in einer dreidimensionalen Darstellung die Anordnung aus geschlitzter Hülse mit im Innern angeordneten Spreizelementen, die wesentlicher Bestandteil des erfindungsgemäßen Gelenkes des erfindungsgemäßen Halters nach dem Ausführungsbeispiel ist;
- Fig. 6: in Aufsicht eine Schnittdarstellung vergleichbar der in Fig. 4 zur weiteren Veranschaulichung des Aufbaus des Gelenks.
- Fig. 7: in einer Seitenansicht (Fig. 7a) sowie einer längsgeschnittenen Ansicht (Fig. 7b) die in Fig. 5 gezeigte Anordnung im verspannten Zustand zum Festlegen der Hülse in den Bohrungen und damit Blockieren des Gelenkes;
- Fig. 8: in den Figuren 7a und b vergleichenbaren Darstellungen 8a und 8b die Hülse mit einer in der Figur jeweils links dargestellten, in das Spreizelement eingebrachten Löseschraube zum Lösen des Spreizelementes aus seiner Spann- bzw. Klemmstellung;
- Fig. 9: in einer Seitenansicht vergleichbar derjenigen der Fig. 7 die Anordnung aus einer geschlitzten Hülse mit (in dieser Ansicht nicht näher dargestellten) im Inneren angeordneten Spreizelementen als wesentlichen Bestandteil für ein erfindungsgemäßes Gelenk in einer zweiten Ausführungsform;
- Fig. 9a: und 9b jeweils eine Ansicht auf die einander gegenüberliegenden Stirnseiten der Anordnung gemäß Fig. 9;
- Fig. 10: eine der Fig. 9 vergleichbare Ansicht mit um 90° um ihre Längsachse gedrehter Hülse; und
- Fig. 11: eine Schnittdarstellung durch eine Anordnung gemäß Fig. 9 bzw. 10 des zweiten Ausführungsbeispiels zur Darstellung des Aufbaus und zur Erläuterung der Wirkungsweise dieses wesentlichen Bestandteils eines erfindungsgemäßen Gelenkes nach dem zweiten Ausführungsbeispiel.

### (weiter auf S. 10 der ursprünglich eingereichten Unterlagen)

In den Figuren sind in verschiedenen Darstellungen mögliche Ausführungsbeispiele eines erfindungsgemäßen Halters mit einem erfindungsgemäßen Gelenk gezeigt und werden nachfolgend beschrieben. Dabei sind die figürlichen Darstellungen weder maßstabsgerecht noch in allen Belangen detailgetreu. Sie beschränken sich vielmehr auf die Darstellung der wesentlichen und für das Verständnis der Erfindung wichtigen Elemente und ihres Zusammenwirkens.

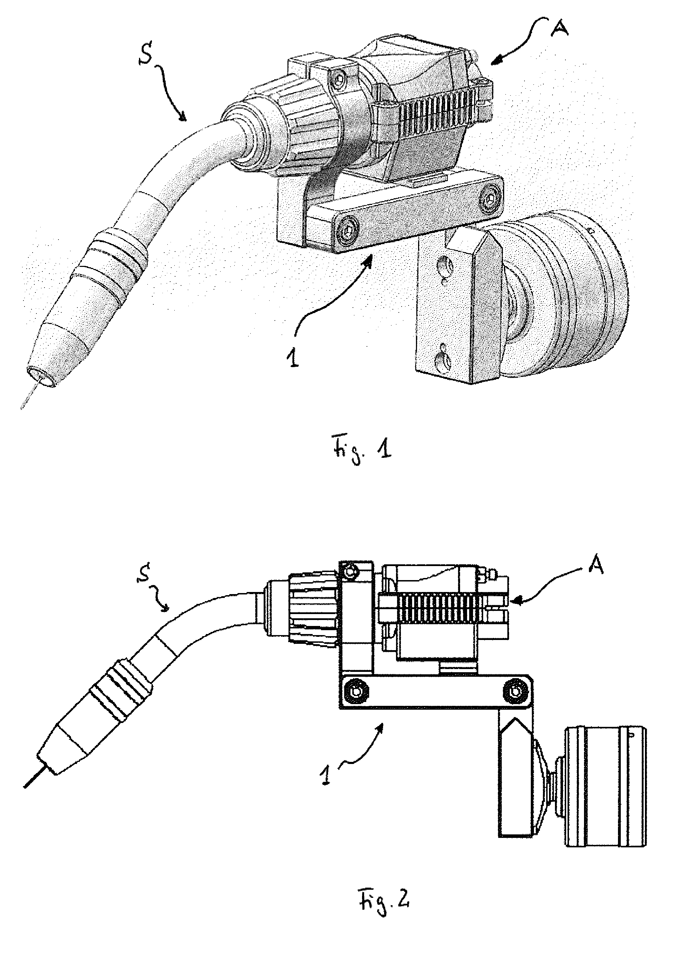

In den Figuren 1 und 2 sind zunächst in zwei verschiedenen Ansichten, einer dreidimensionalen Ansicht in Fig. 1 und in einer Seitenansicht in Fig. 2, zwei Darstellungen einer Anordnung aus einem erfindungsgemäßen Halter, dort mit der Bezugsziffer 1 bezeichnet, und einer in dem Halter 1 aufgenommenen Schweißpistole S dargestellt. Bei der Schweißpistole S handelt es sich um eine solche, wie sie für das MIG/MAG-Schweißverfahren verwendet wird. Die Schweißpistole S ist in diesem Ausführungsbeispiel in einer O-förmigen Halteöse aufgenommen, die einseitig durch einen Schlitz geöffnet ist, welcher Schlitz mit einer Schraube überbrückt ist, zum Verringern des Innendurchmessers der Halteöse und Einspannen und klemmenden Fixieren des Schweißbrenners S. Diese Art der Befestigung ist hinlänglich bekannt und muss hier nicht näher erläutert werden.

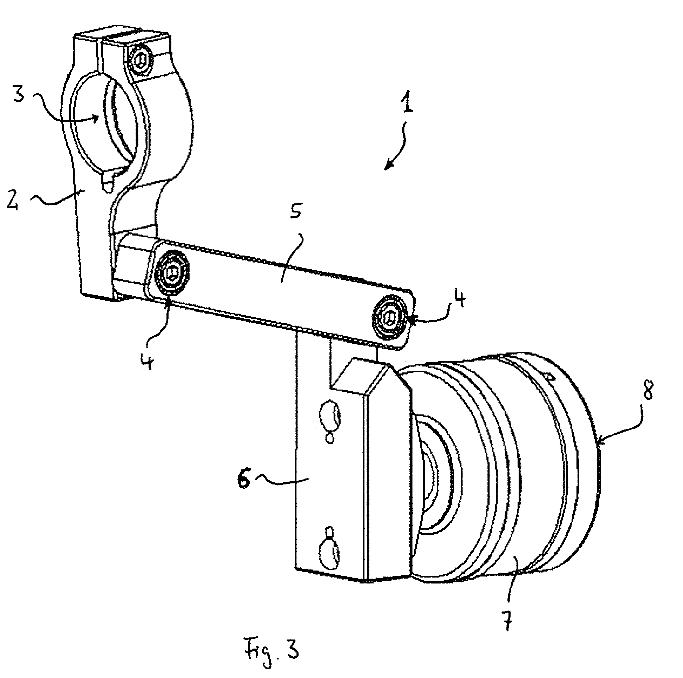

An einem rückwärtigen Ende weist die Schweißpistole S einen Anschluss A zum Verbinden mit einem sogenannten Schlauchpaket für die Zuführung der Schweißmedien, also des Schweißdrahtes sowie des Schweißgases und des Schweißstroms und ggf. von Kühlwasser im Falle einer wassergekühlten Schweißpistole S auf. Das Schlauchpaket ist hier nicht gezeigt, ebenso wenig wie der Roboterarm, an dem der Halter 1 in einer nachfolgend anhand Fig. 3 noch näher erläuterten Weise festgelegt wird.

Fig. 3 zeigt den Halter 1 aus den vorherigen Darstellungen ohne die eingespannte Schweißpistole S und in einer anderen Ausrichtung der nachfolgend noch näher zu beschreibenden Gelenke. Hier ist zu erkennen, dass der Halter 1 zunächst ein Kupplungsstück 2 aufweist, welches die oben bereits beschriebene und hier mit der Bezugsziffer 3 bezeichnete Halteöse ausbildet, in die die Schweißpistole eingesetzt und in der die Schweißpistole durch Verspannen und Verklemmen fixiert gehalten wird. Das Kupplungsstück 2 ist mit einer Mittelstrebe 5 verbunden über ein Gelenk 4. Das Gelenk 4 erlaubt ein Verschwenken zwischen dem Kupplungsstück 2 und Mittelstrebe 5 um eine Schwenkachse. Ein weiteres Gelenk 4 ist zwischen der Mittelstrebe 5 und einer Anschlussstrebe 6 ausgebildet und befindet sich an einem dem zwischen dem Kupplungsstück 2 und der Mittelstrebe 5 gebildeten Gelenk 4 gegenüberliegenden Längsende der Mittelstrebe 5. Mittels dieses Gelenkes 4 kann ein Kippwinkel zwischen der Mittelstrebe 5 und der Anschlussstrebe 6 eingestellt werden. Die Anschlussstrebe 6 ist wiederum mit einer Sicherheitsabschaltung 7 verbunden, die ein elastisches Ausweichen des Halters 1 im Falle z.B. einer Kollision mit einem Werkstück erlaubt, in einem solchen Falle durch entsprechende Mikroschalter oder dgl. gesteuert eine Sicherheitsabschaltung der Zufuhr von Schweißmedien, insbesondere des Schweißstromes, zu der Schweißpistole S bewirkt und auslöst. Die Sicherheitsabschaltung S weist an einem rückwärtigen Ende einen Anschlussflansch 8 auf, mit dem der Halter 1 an einem freien Ende eines Roboterarms (hier nicht gezeigt) eines Mehrachsroboters festgelegt wird.

Die Gelenke 4 erlauben, wie sich bereits durch einen Vergleich der Figuren 1 bzw. 2 mit der Fig. 3 erkennen lässt, eine frei wählbare Ausrichtung und Formgebung des Halters durch ein freies mögliches Verschwenken des Kupplungsstückes 2 relativ zur Mittelstrebe 5 bzw. der Mittelstrebe 5 relativ zu der Anschlussstrebe 6. Dabei sind die Gelenke 4 derart eingerichtet, dass sie nicht nur eine freie und in dem Schwenkwinkel ungerastert vorgebbare Verschwenkbarkeit ermöglichen, sondern auch ein sicheres Fixieren des Gelenkes in einer einmal eingenommenen und gewählten Schwenkposition.

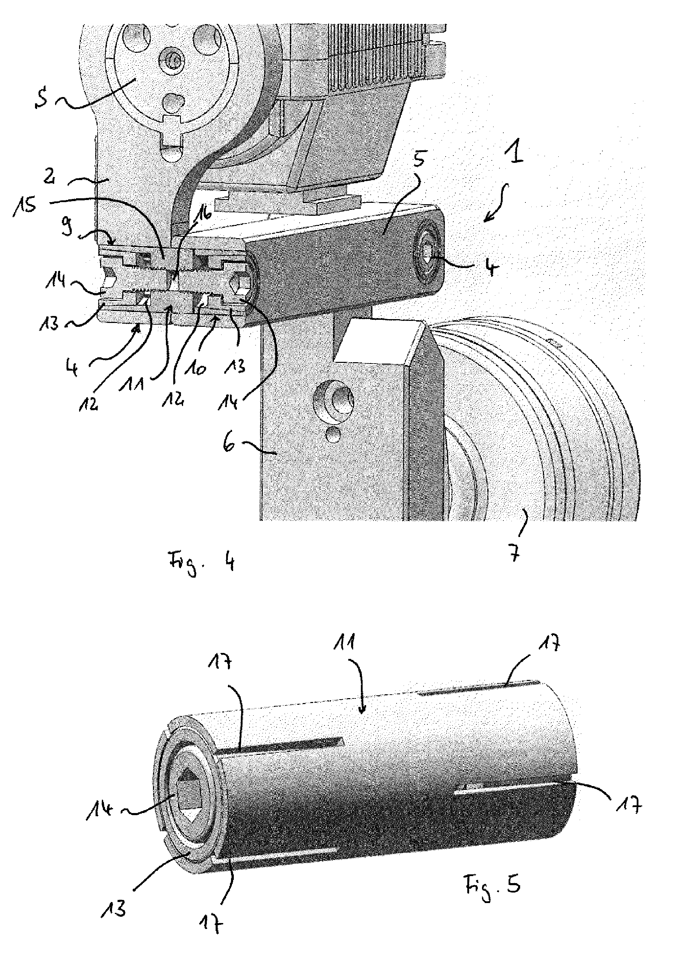

Der erfindungsgemäße Aufbau möglicher Ausführungsformen der Gelenke wird nun anhand der nachfolgenden Darstellung und Beschreibung der Figuren 4 bis 8 (erstes Ausführungsbeispiel) und 9 bis 11 näher erläutert.

Fig. 4 zeigt dabei einen Ausschnitt des Halters 1 mit darin aufgenommener Schweißpistole S und einem Längsschnitt durch das zwischen dem Kupplungsstück 2 und der Mittelstrebe 5 nach einem ersten Ausführungsbeispiel ausgebildete Gelenk 4. Zu erkennen ist, dass in dem Kupplungsstück 2 eine diese durchbrechende Bohrung 9 gebildet ist und gleichsam eine Bohrung 10 gleichen Durchmessers in der Mittelstrebe 5. In beide Bohrungen 9, 10 eingesetzt ist eine Hülse 11, die einen zu den Innendurchmessern der Bohrungen 9 und 10 korrespondierenden Außendurchmesser aufweist, in der Bohrung mit Passung, jedoch mit einem ausreichenden Spiel sitzt, um ein Verschwenken des Kupplungsstückes 2 relativ zu der Mittelstrebe 5 um die durch die Längsachse der Hülse 11 definierte Schwenkachse zu erlauben.

Die Hülse 11 ist in dem Gelenk nach diesem Ausführungsbeispiel zu einer senkrecht zu ihrer Längsachse orientierten Mittelebene spiegelsymmetrisch gebildet und weist an beiden Enden Aufnahmeräume 12 auf, die sich von der jeweiligen Außenseite der Hülse 11 her in Richtung des Inneren konisch verjüngende umlaufende Wände haben. In den Aufnahmeräumen 12 ist jeweils ein mit einer konischen Außenkontur, die zu dem konischen Wandverlauf des Aufnahmeraumes 12 korrespondiert, versehenes, topfartiges Spreizelement 13 eingesetzt und in Längsrichtung der Hülse 11 bewegbar. Durch zentrale Öffnungen in den Spreizelementen 13 sind Spannschrauben 14 mit ihren Gewindestangenabschnitten geführt, welches Spannschrauben 14 in eine in einem mittleren Längsabschnitt 15 eingebrachte zentrale Bohrung 16 und ein dort ausgebildetes Innengewinde eingreifen. Durch Einschrauben der Spannschrauben 14 in das Innengewinde der zentralen Bohrung 16 werden die Spreizelemente 13 mit ihrer konischen Außenform in Richtung des zentralen Längsabschnittes 15 gezogen und spreizen die Außenwand der Hülse 11 an der jeweiligen Stirnseite, die sich - begünstigt durch an dieser jeweiligen Stirnseite in Längsrichtung eingebrachte Längsschlitze 17 (vgl. Fig. 5) nach außen unter Vergrößerung des Durchmessers verformen und so gegen das Innere der jeweiligen Bohrung 9 bzw. 10 in dem Kupplungsstück 2 bzw. der Mittelstrebe 5 pressen und so eine kraftschlüssige Verbindung eingehen. Durch die Anordnung jeweils einer Spannschraube 14 bzw. eines mit dieser in der Hülse 11 zu verspannenden Spreizelementes 13 an jeder der beiden Stirnseiten der Hülse 11 ist hier ein sehr definierter Krafteintrag möglich, so dass eine definierte und sichere Feststellung des Gelenkes 4 erfolgen kann.

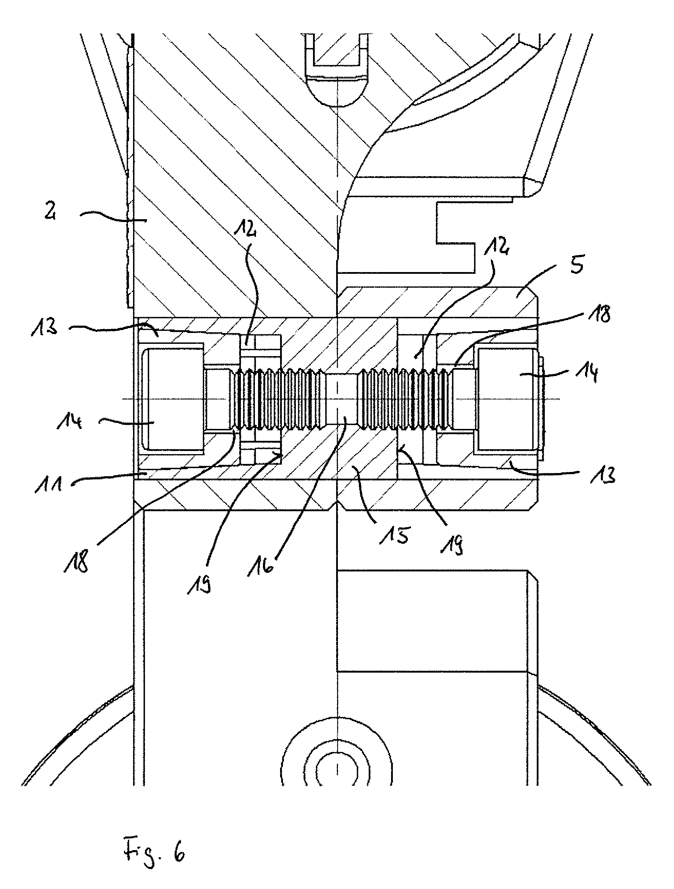

In Fig. 6 ist in einer ähnlichen Ausschnittdarstellung wie in Fig. 4 diese Situation noch einmal gezeigt zum besseren Verständnis. Gut zu erkennen ist hier, dass in dem Gelenk nach diesem ersten Ausführungsbeispiel die Spannschrauben 14 durch in ihrem Durchmesser entsprechend größere zentrale Öffnungen 18 und Elemente 13 geführt sind, ohne an diesen anzuliegen. Weiterhin erkennbar sind in dieser Darstellung Anschlagflächen bzw. Anschläge 19, die jeweils am innen gelegenen Ende der Aufnahmeräume 12 im Übergang zu dem Längsabschnitt 15 dort gebildet sind und im Wesentlichen senkrecht zu der Längserstreckung der Hülse 11 verlaufen.

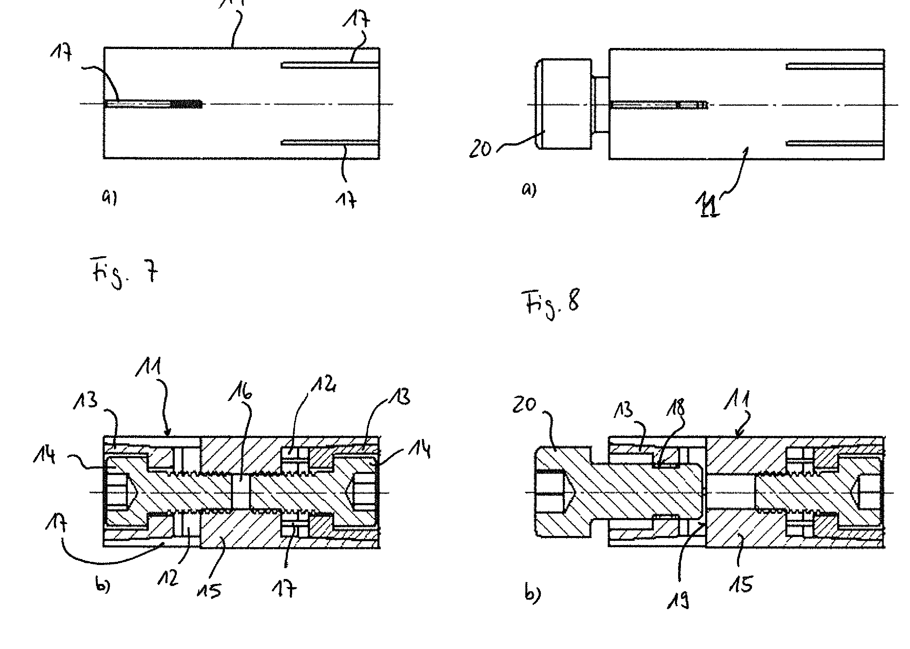

Die Figuren 7a und b zeigen noch einmal in Einzeldarstellung die einen wesentlichen Bestandteil der nach dem ersten Ausführungsbeispiel gebildeten Gelenke 4 (siehe Fig. 3) bildenden Hülse 11 und ihr Innenleben. In der Fig. 7, die eine Darstellung in einer Seitenansicht zeigt, sind noch einmal gut die Längsschlitze 17 zu erkennen, die ausgehend von den beiden freien Enden der Hülse in Längsrichtung Ihres Verlaufes jeweils über eine Strecke von etwas mehr als 1/3 der Länge in diese eingebracht sind. An jeder der Stirnseiten sind insgesamt vier, entlang des Umfanges um 90° zueinander beabstandete Längsschlitze 17 angeordnet, wie sich insbesondere Fig. 5 gut entnehmen lässt. Um eine Materialschwächung der Hülse 11 in übermäßiger Weise zu vermeiden, sind die Längsschlitze 17 an den jeweiligen Längsenden entlang des Umfanges versetzt angeordnet, in diesem Fall um 45°.

Fig. 7b zeigt noch einmal die Situation im Innern der Hülse 11 in einer Längsschnittdarstellung. Auch hier ist noch einmal zu erkennen, wie die Spannschrauben 14 mit ihren Köpfen im Innern der topfartig gebildeten Spreizelemente 13 ruhen und diese beim Festziehen in das in der zentralen Bohrung 16 in dem mittleren Längsabschnitt 15 der Hülse 11 gebildete Innengewinde in Richtung des Zentrums der Hülse 11 ziehen und dabei ein Aufspreizen der Hülse 11 an den Enden bewirken und damit ein Verklemmen der Hülse 11 in den Bohrungen 9 bzw. 10 des Halteabschnittes 2 bzw. des Mittelsteges 5.

Da aufgrund des Zusammenwirkens der konischen Bereiche der Innenwände der Hülse 11 in den Aufnahmeräumen 12 mit der Außenwand des Spreizelementes 13 die Spreizelemente 13 jeweils in der verspannten und die Hülse 11 spreizenden und somit eine Klemmverbindung schaffenden Position verkeilen und sich trotz eines Lösens der Spannschrauben 14 nicht ohne weiteres zurückbewegen und die Verriegelungsstellung des Gelenkes freigeben, ist in jedem Spreizelement 13 in der zentralen Öffnung 18 ein weiteres Innengewinde vorgesehen, welches einen größeren Durchmesser aufweist als das Innengewinde in der zentralen Öffnung 16 in dem mittleren Längsabschnitt 15. Dieses Innengewinde wirkt mit dem Gewinde der Spannschrauben 14, bei denen es sich z.B. um Schrauben des Maßes M6 handeln kann, nicht zusammen, erlaubt jedoch ein Einschrauben einer Löseschraube 20 mit größerem Durchmesser, z.B. einem Gewinde des Maßes M8. Diese Situation ist in den Figuren 8a und b gezeigt, wo auf der in der Figur jeweils links dargestellten Seite eine solche Löseschraube 20 eingeschraubt in die mittlere Öffnung des Spreizelements 13 zu erkennen ist. Aufgrund des größeren Durchmessers des Schraubgewindes der Löseschraube 20 kann diese nicht in die zentrale Öffnung 16 und das dort vorgesehene Innengewinde in dem mittleren Längsabschnitt 15 der Hülse 11 eingreifen, stößt vielmehr mit ihrer Vorderseite an dem Anschlag 19 an und stützt sich dagegen ab. Wird die Löseschraube 20 nun weiter in das Gewinde der Öffnung 18 eingeschraubt, wird dadurch das Spreizelement 13 in Richtung des freien Endes der Hülse 11 verlagert und gibt das freie Ende der Hülse 11 für ein Zurückfedern frei, so dass sich die Verklemmung löst, die Gelenkverbindung entriegelt werden kann.

Es versteht sich von selbst, dass nicht nur das Gelenk 4 zwischen dem Kupplungsstück 2 und der Mittelstrebe 5 in der oben geschilderten Weise aufgebaut sein kann, sondern ebenso auch das Gelenk 4 zwischen der Mittelstrebe und der Anschlussstrebe 6.

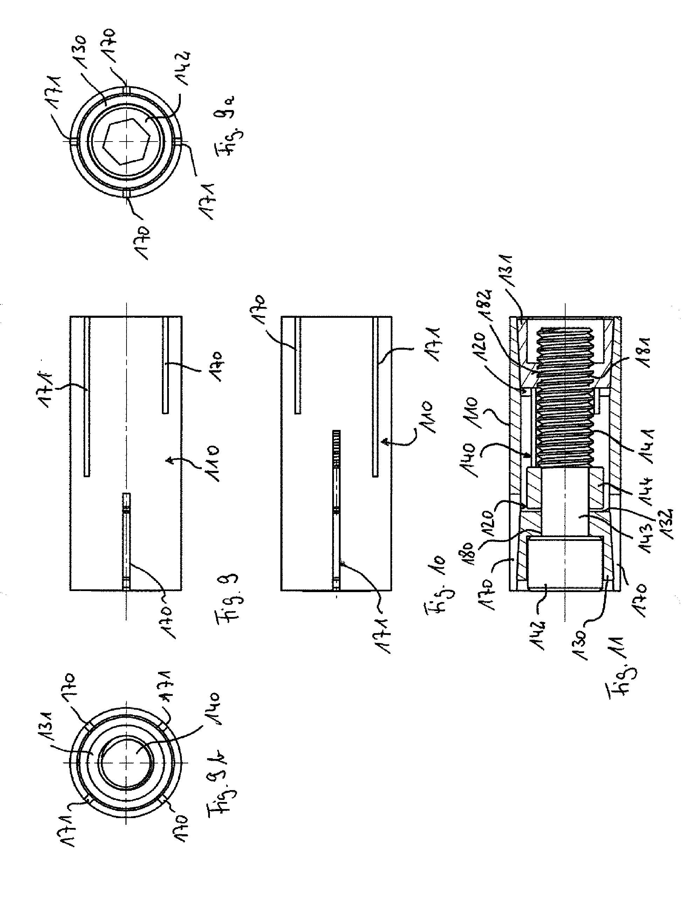

In den Figuren 9 bis 11 ist eine den Kern eines erfindungsgemäßen Gelenkes in einer zweiten Ausgestaltungsform bildende Anordnung aus Hülse mit entsprechendem Innenleben in verschiedenen Ansichten dargestellt.

Auch diese Anordnung weist eine Hülse 110 auf, die zur Ausbildung eines Gelenkes 4 entsprechend den Darstellungen in den Figuren 1 bis 3 bzw. analog zu der Darstellung in Fig. 4 in entsprechende Bohrungen der beteiligten Elemente mit ausreichendem Spiel, jedoch passgenau sitzt, um in einem unverklemmten Zustand ein Verdrehen der Elemente mit den Bohrungen um die Hülsenlängsachse, die zugleich die Gelenkachse ist, zu ermöglichen.

Im Inneren der Hülse 110 angeordnet sind, wie in Fig. 11 zu erkennen, zwei mit konischer Umfangsfläche geformte Spreizelemente 130 und 131, die jeweils von den einander gegenüberliegenden Stirnseiten der Hülse 110 her in diese eingeführt sind. Diese Spreizelemente 130, 131 sitzen in endseitigen Aufnahmeräumen 120 der Hülse 110, die entsprechend komplementär konisch geformte Innenflächen aufweisen. Die beiden Spreizkörper 130, 131 unterscheiden sich in dieser Ausgestaltungsform dadurch, dass die zentrale Öffnung 180 des Spreizkörpers 130 glattwandig ist, eine zentrale Öffnung 181 in dem Spreizkörper 131 mit einem Innengewinde 182 versehen ist.

In der in Fig. 11 gezeigten Position ist eine Spannschraube 140 mit ihrem am Ende des Schraubenschaftes 143 eingebrachten Außengewinde 141 in das korrespondierende Innengewinde 182 in den Spreizkörper 131 eingeschraubt. Mit ihrem Schraubenkopf 142 sitzt die Spannschraube 140 an dem Spreizelement 130. Wird die Spannschraube 140 mit ihrem Außengewinde 141 in das Innengewinde 182 des Spreizelementes 131 eingeschraubt, so werden die beiden schwimmend gelagerten Spreizelemente 130, 131 aufeinander zu in Richtung der Mitte der Hülse 110 gezogen. Durch das Zusammenwirken der konischen Umfangsflächen der Spreizelemente 130, 131 mit den entsprechenden konischen Gegenflächen in den Aufnahmeräumen 120 in der Hülse 110 wird die Hülse an ihren axialen Enden umfangsseitig gespreizt, entsteht der wie in obigem Ausführungsbeispiel bereits beschriebene Klemmeffekt, mit dem das mit einer Anordnung gemäß dem in den Figuren 9 bis 11 gezeigten Ausführungsbeispiel bestückte Gelenk verriegelt.

Wie auch in dem Ausführungsbeispiel zuvor unterstützen Längsschlitze 170, 171, die von den Stirnseiten der Hülse 110 her die Wand der Hülse durchbrechen, ein Spreizen der Hülse an ihren jeweiligen stirnseitigen Endbereichen. In diesem Ausführungsbeispiel sind unterschiedlich lange Längsschlitze vorgesehen, während die Längsschlitze 170 sich wie in dem Ausführungsbeispiel zuvor die Längsschlitze 17 auf etwa ein Drittel der Länge der gesamten Hülse belaufen, sind Längsschlitze 171 vorgesehen, die sich über die Hälfte der Hülsenlänge hinaus erstrecken. Es sind ausgehend von jeder Stirnseite der Hülse jeweils vier Längsschlitze 170 und 171 eingebracht, die um 90° versetzt sind. In Umfangsrichtung sind dabei immer abwechselnd ein kurzer Längsschlitz 170 und ein langer Längsschlitz 171 eingebracht, so dass sich die kurzen Längsschlitze 170 diametral gegenüberliegen, ebenso wie die langen Längsschlitze 171. Diese Anordnungen aus Längsschlitzen sind an den einander gegenüberliegenden Längsenden der Hülse 110 um 45° versetzt bzw. verdreht um die Hülsenlängsachse gebildet. Auf diese Weise wird, insbesondere durch die langgezogene Längsschlitze 171 ein erleichtertes Aufspreizen der Hülse erreicht, wobei die wie beschriebene Anordnung der Längsschlitze dafür Sorge trägt, dass insbesondere im Zentrum der Hülse ausreichend viel Material der Hülsenwand steht, um nicht etwa ein Brechen der Hülse oder ein Abscheren bei aufgebrachten Drehmomenten beim Fixieren der Spannschraube 140 zu riskieren.

In Fig. 11 ist schließlich noch zu erkennen, dass auf dem Schaft 143 der Spannschraube 140 in einem nicht mit dem Außengewinde 141 versehenen Bereich und auf der dem Schraubenkopf 142 gegenüberliegenden Stirnseite des Spreizelementes 130 ein Absatz 144 ausgebildet ist. Dieser ist in diesem Ausführungsbeispiel durch eine auf den Schaft der Spannschraube 140 aufgebrachte für einen festen Sitz auf der Spannschraube mit dem Schaft 143 verpresste Presshülse gebildet.

Mit diesem Absatz 144 wird ein Lösen der verklemmten Gelenkverbindung erreicht. Wenn nämlich die Spannschraube 140 zum Lösen der Verbindung aus dem Innengewinde 182 des Spreizelementes 131 ausgeschraubt wird, stößt der Anschlag 144 mit seiner dem Schraubenkopf 142 zugewandten Stirnseite gegen eine durch die innen liegende Stirnseite des Spreizelementes 130 gebildete Fläche, die einen Anschlag 132 bildet, so dass bei einem weiteren Lösen und Ausschrauben der Spannschraube 142 dadurch eine die beiden Spreizelemente 130 und 131 auseinandertreibende Kraft aufgebracht wird, so dass sich zumindest eines der Spreizelemente 130 und 131 aus der verkeilten Stellung löst und damit jedenfalls an einem Ende der Hülse 110 diese aus der aufgespreizten Stellung heraus relaxiert und damit wieder frei drehbar in der jeweiligen Bohrung des beteiligten starren Elementes des Gelenkes liegt, so dass das Gelenk entsprechend bewegt werden kann.

Hierin liegt ein weiterer Vorteil, indem bei dem hier gezeigten Ausführungsbeispiel nämlich nicht ein gesondertes Lösemittel, wie die Löseschraube 20 in dem voranstehend geschilderten Ausführungsbeispiel erforderlich ist, da in diesem Ausführungsbeispiel die Spannschraube 140 durch die Ausgestaltung mit dem Absatz 144 zugleich auch die Funktion des Lösemittels mit übernimmt.

Selbstverständlich ist es auch möglich, eine entsprechende Gestaltung der Spannschraube 14 in dem zuerst beschriebenen Ausführungsbeispiel vorzusehen und somit auch in diesem Ausführungsbeispiel den entsprechenden Vorteil zu erzielen.

Mit dem hier gezeigten Halter und insbesondere der besonderen Gelenkverbindung mit dem oben beschriebenen Aufbau ist eine einfache, leicht zu verriegelnde Gelenkverbindung beschrieben, die eine flexible Einststellung und sichere Fixierung des variablen Halters 1 ermöglicht, z.B. für ein Anpassen des Halters 1 an unterschiedliche Geometrien von darin aufgenommenen Schweißbrennern S oder aber auch für ein Nachrichten des TCP. Die Möglichkeit des Einschraubens einer Löseschraube 20 in das Innengewinde der zentralen Öffnung 18 in dem Spreizelement 13 erlaubt bei dem ersten Ausführungsbeispiel ein zuverlässiges und sicheres Lösen der Gelenkverbindung auch dann, wenn die Konizität der beteiligten Flächen, Außenfläche des Spreizelements 13 und Innenfläche der Hülse 11 in dem Aufnahmeraum 12 im Zusammenwirken mit dem aufgebrachten Pressdruck ein einfaches Lösen ohne Kraftaufbringung nicht erlaubt, wie dies z.B. bei den hier verwendeten Konuswinkeln im Bereich von 2° bis 6°, insbesondere 3°, ansonsten zu beobachten ist. Bei gleichartigen Konuswinkeln und dem damit verbundenen Effekt des möglichen Verklemmens besorgt bei dem zweiten beschriebenen Ausführungsbeispiel der Absatz 144 auf der Spannschraube 140 das erzwungene Lösen zumindest eines der Spreizelemente 130, 131 und somit eine Freigabe der Hülse 110 aus der Klemmstellung.

Der erfindungsgemäße Halter mit den besonderen Gelenken ist dabei auch solchermaßen konzipiert, dass er modular aufgebaut werden kann mit der Möglichkeit eines schnellen und einfachen Austausches z.B. der Mittelstrebe 5, die in unterschiedlichen Längen gestaltet werden kann oder aber auch mit Kröpfungen oder Kränkungen, um hier besondere Geometrien zu verwirklichen, z.B. für eine Anpassung an besondere Schweißpistolen.

Die Anbindung an die Schweißpistole S, die hier in Form der Halteöse 3 gezeigt ist, kann auch mit einem eine entsprechende Bohrung für die Aufnahme der Hülse 11 bzw. 110 und Bildung des Gelenkes 4 (oder mit einer fest angeformten Hülse zum Einbringen an eine entsprechende Bohrung in einem weiteren Element, z.B. der Mittelstrebe 5) versehenen, direkt an der Schweißpistole fest angeformten Fortsatz gebildet sein. Ein solcher Fortsatz ist im Sinne dieser Erfindung dann auch Bestandteil des Halters und kann eines der starren Elemente des Halters bilden, die über ein entsprechendes Gelenk miteinander verbunden sind.

Die vorstehende Beschreibung des Ausführungsbeispiels ist für die Erfindung nicht beschränkend, sie stellt lediglich eine Darstellung einer möglichen Gestaltung und Umsetzungsvariante der Erfindung dar. Insbesondere ist es, wie bereits angedeutet, möglich, die Hülse 11 bzw. 110 nicht in Bohrungen in beiden beteiligten starren Elementen des Halters einzubringen, sondern vielmehr als einseitig fest an einem der Elemente angeformtes Element auszubilden, wobei dann die Kombination aus Spannschraube und Spreizelement lediglich auf der Seite mit dem freien Ende der an dem weiteren Element fest angeformten Hülse im Inneren derselben angeordnet ist. Auch weitere Gestaltungen sind denkbar, z.B. Halter mit nur einem in erfindungsgemäßer Weise ausgebildeten Gelenk oder solche mit noch mehr mit entsprechenden Gelenken verbundenen starren Elementen.

### Bezugszeichenliste

- 1: Halter
- 2: Kupplungsstück
- 3: Halteöse
- 4: Gelenk
- 5: Mittelstrebe
- 6: Anschlussstrebe
- 7: Sicherheitsabschaltung
- 8: Anschlussflansch
- 9: Bohrung
- 10: Bohrung
- 11: Hülse
- 12: Aufnahmeraum
- 13: Spreizelement
- 14: Spannschraube
- 15: Längsabschnitt
- 16: zentrale Bohrung
- 17: Längsschlitz
- 18: Öffnung
- 19: Anschlag
- 20: Löseschraube
- 110: Hülse
- 120: Aufnahmeraum
- 130: Spreizelement
- 131: Spreizelement
- 132: Anschlag
- 140: Spannschraube
- 141: Außengewinde
- 142: Schraubenkopf
- 143: Schaft
- 144: Absatz
- 180: zentrale Öffnung
- 181: zentrale Öffnung
- 182: Innengewinde
- 170: Längsschlitz
- 171: Längsschlitz

- A: Anschluss Schlauchpaket
- S: Schweißpistole

## Patentansprüche

1. Um eine Schwenkachse verschwenkbares und in einer Schwenkposition feststellbares, zwischen zwei starren Elementen (2, 5, 6) ausgebildetes Gelenk (4) für eine Halterung (1) für eine Schweißpistole (S) zum Anschluss an einen Arm eines Schweißroboters, **gekennzeichnet durch** eine an einem ersten der zwei starren Elemente (2, 5, 6) festgelegten, einen Innendurchmesser und einen Außendurchmesser aufweisende Hülse (11; 110) und eine einen Innendurchmesser aufweisende erste Bohrung (9, 10) an dem zweiten der starren Elemente(2, 5, 6), wobei die Hülse (11; 110) in die erste Bohrung (9, 10) eingeschoben ist und der Innendurchmesser der ersten Bohrung (9, 10) und der Außendurchmesser der Hülse (11; 110) so gewählt sind, dass das zweite starre Elemente (2, 5, 6) mit der ersten Bohrung (9, 10) relativ zu der Hülse (11; 110) verdreht werden kann, wobei im Innern (12; 120) der Hülse (11; 110) ein in Längsrichtung der Hülse (11; 110) verlagerbares erstes Spreizelement (13; 130) vorgesehen ist, welches eine zentrale Öffnung (18; 180) aufweist, **durch** die eine Spannschraube (14; 140) geführt ist mit einem Gewindeabschnitt mit Außengewinde (141) und einem Schraubenkopf (142), der an dem ersten Spreizelement (13; 130) an einem Stirnende der zentralen Öffnung (18; 180) anliegt, und wobei ein Widerlagerelement (131) vorgesehen ist mit einem zu dem Außengewinde (141) korrespondierenden Innengewinde (182) zum verschraubenden Aufnehmen des Gewindeabschnitts der Spannschraube (14; 140), wobei **durch** Einschrauben der Spannschraube (14; 140) in das Widerlagerelement (131) ein Spreizen der Hülse (11; 110) und so eine Umfangsverklemmung der Hülse (11; 110) in der ersten Bohrung (9, 10) bewirkt wird und wobei ein mit einem Anschlag zusammenwirkendes Lösemittel vorgesehen ist zum Aufheben einer Spreizung der Hülse (11; 110) und der **dadurch** ausgelösten Umfangsverklemmung der Hülse (11; 110) in der ersten Bohrung (9, 10).

2. Gelenk nach Anspruch 1, **dadurch gekennzeichnet, dass** das Widerlagerelement ein im Innern der Hülse (11) vorgesehener, von einem ersten freien Ende der Hülse (11) her gesehen hinter dem ersten Spreizelement (13) gelegener erster Längsabschnitt (15) der Hülse (11) ist mit einer zentralen Bohrung (16), die das Innengewinde aufweist, welches einen gegenüber dem Innendurchmesser der Hülse (11) verringerten Gewindedurchmesser hat.

3. Gelenk nach Anspruch 2, **dadurch gekennzeichnet, dass** die Hülse (11) eine durchgehende Hülse (11) ist und in dem ersten starren Element (2, 5, 6) eine zweite Bohrung (9, 10) mit einem zu dem Außendurchmesser korrespondierenden Innendurchmesser vorgesehen ist, wobei der Innendurchmesser der zweiten Bohrung (9, 10) und der Außendurchmesser der Hülse (11) so gewählt sind, dass das erste starre Elemente (2, 5, 6) mit der zweiten Bohrung (9, 10) relativ zu der Hülse (11) verdreht werden kann, wobei im Innern der Hülse (11) ein zweiter Längsabschnitt (15) vorgesehen ist, der ein Innengewinde mit einem gegenüber dem Innendurchmesser der Hülse (11) verringerten Gewindedurchmesser aufweist, und wobei im Innern (12) der Hülse (11) und von einem zweiten freien Ende der Hülse (11) her gesehen vor dem zweiten Längsabschnitt (15) ein in Längsrichtung der Hülse (11) verlagerbares zweites Spreizelement (13) vorgesehen ist, welches eine zentrale Öffnung (18) aufweist, durch die eine Spannschraube (14) geführt ist mit einem zu dem Innengewinde des zweiten Längsabschnitts (15) der Hülse (11) korrespondierenden Außengewinde und einem Schraubenkopf, der an dem zweiten Spreizelement (13) an einem dem zweiten Längsabschnitt (15) der Hülse (11) gegenüberliegenden Stirnende der zentralen Öffnung (18) anliegt.

4. Gelenk nach Anspruch 3, **dadurch gekennzeichnet, dass** der erste und der zweite Längsabschnitt (15) der Hülse (11) verbunden ausgeführt sind mit einem einzigen durchgehenden Innengewinde.

5. Gelenk nach einem der Ansprüche 2 bis 4, **dadurch gekennzeichnet, dass** der erste und/oder der zweite Längsabschnitt zwischen der den Innendurchmesser begrenzenden Innenwand der Hülse (11) und dem Innengewinde quer zur Längserstreckung der Hülse (11) den Anschlag (19) aufweist und dass in der zentralen Öffnung (18) des ersten und/oder zweiten Spreizelements (13) ein weiteres Innengewinde angeordnet ist mit einem Gewindedurchmesser der größer ist als der Gewindedurchmesser des Innengewindes in dem das Widerlager bildenden ersten Längsabschnitt (15) der Hülse (11) zum Einschrauben einer das Lösemittel bildenden Löseschraube mit einem zu dem Innengewinde in der zentralen Bohrung (16) größeren Außengewinde.

6. Gelenk nach Anspruch 1, **dadurch gekennzeichnet, dass** die Hülse (110) eine durchgehende Hülse (110) ist und in dem ersten starren Element (2, 5, 6) eine zweite Bohrung (9, 10) mit einem zu dem Außendurchmesser korrespondierenden Innendurchmesser vorgesehen ist, wobei der Innendurchmesser der zweiten Bohrung (9, 10) und der Außendurchmesser der Hülse (110) so gewählt sind, dass das erste starre Elemente (2, 5, 6) mit der zweiten Bohrung (9, 10) relativ zu der Hülse (110) verdreht werden kann, wobei im Innern der Hülse (110) dem ersten Spreizelement (130) gegenüberliegend ein zweites Spreizelement (131) angeordnet ist, welches eine zentrale Öffnung (181) und ein darin eingebrachtes Innengewinde (182) aufweist, welches zu dem Außengewinde (141) der Spannschraube (140) korrespondiert, wobei das zweite Spreizelement (131) das Widerlager bildet.

7. Gelenk nach einem der Ansprüche 1 oder 6, **dadurch gekennzeichnet, dass** die Spannschraube (14; 140) auf einem Schaftabschnitt, der auf einer der Stirnseite des ersten Spreizelementes (13; 130), an der der Schraubenkopf (142) anliegt, gegenüberliegenden Stirnseite des ersten Spreizelementes (13; 130) liegt, einen Absatz (144) mit vergrößertem Durchmesser aufweist, die im Durchmesser größer ist als die zentrale Öffnung (18; 180) in dem ersten Spreizelement (13; 130) und der auf der dem ersten Spreizelement (13; 130) zugewandten Seite den Anschlag aufweist, wobei die Spannschraube (14; 140) mit dem Absatz (144) zugleich das Lösemittel bildet.

8. Gelenk nach einem der vorhergehenden Ansprüche, **dadurch gekennzeichnet, dass** das erste und/oder das zweite Spreizelement (13; 130, 131) eine konische Umfangsform aufweist bzw. konische Umfangsformen aufweisen und dass die Hülse (11; 110) in den Bereichen (12; 120), in denen das erste und/oder das zweite Spreizelement (13; 130, 131) angeordnet ist bzw. angeordnet sind, eine zu der konischen Umfangsform des jeweiligen Spreizelementes (13; 130, 131) korrespondierend konisch geformte Innenform aufweist.

9. Gelenk nach einem der vorhergehenden Ansprüche, **dadurch gekennzeichnet, dass** die Hülse (11; 110) an dem ersten und/oder dem zweiten freien Ende mit Längsschlitzen (17; 170, 171) in der Hülsenwand versehen ist.

10. Gelenk nach einem der vorhergehenden Ansprüche **dadurch gekennzeichnet, dass** diese wenigstens ein zweites um eine zweite Schwenkachse verschwenkbares und in einer Schwenkposition feststellbaren Gelenk (4) zwischen zwei starren Elementen (2, 5, 6) aufweist, welches in einer Kombination aus an einem ersten der starren Elemente (2, 5, 6) festgelegten Hülse (11; 110) und einer Bohrung (9, 10) in dem zweiten der starren Elemente (2, 5, 6) mit den Merkmalen nach wenigstens einem der vorhergehenden Ansprüche gebildet ist.

11. Halterung für eine Schweißpistole (S) zum Anschließen der Schweißpistole (S) an einen Arm eines Schweißroboters mit einem ersten Anschluss (8) zum Verbinden mit dem Roboterarm und einem zweiten Anschluss (3) zum Verbinden mit der Schweißpistole (S) und mit wenigstens einem zwischen zwei starren Elementen (2, 5, 6) der Halterung (1) vorgesehenen, um eine erste Schwenkachse verschwenkbaren und in einer Schwenkposition feststellbaren Gelenk (4) nach einem der vorhergehenden Ansprüche.

## Claims

1. An articulation (4) provided between two fixed elements (2, 5, 6) and pivotable around a pivoting axis and lockable in a pivoted position, for a mounting (1) intended for a welding gun (S) for connection to an arm of a welding robot, **characterised by** a sheath (11; 110) having an inner diameter and an outer diameter and locked at one of both fixed elements (2, 5, 6) and a first bore (9, 10) having an inner diameter at the second fixed element (2, 5, 6), where the sheath (11; 110 is inserted into the first bore (9, 10) and the inner diameter of the first bore (9, 10) and the outer diameter of the sheath (11; 110) are selected so that the second fixed element (2, 5, 6) can rotate with the fixed bore (9, 10) with respect to the sheath (11; 110), wherein a first spacing element (13; 130) is provided inside (12; 120) of the sheath (11; 110), a spacing element, mobile in the longitudinal direction of the sheath (11; 110), which element has a central opening (18; 180), traversed by a locking screw (14; 140) fitted with a threading section with an outer thread (141) and a screw head (142), resting at the first spacing element (13; 130) against a front end of the central opening (18; 180), and wherein a counter-bearing element (131) is fitted with an internal thread (182) matching the external thread (141) to accommodate in a screwing fashion the threading section of the locking screw (14; 140), wherein the locking screw (14; 140) will be turned in the counter-bearing element (131) so as space apart the sheath (11; 110) and thereby enable circumferential locking of the sheath (11; 110) in the first bore (9, 10) and wherein a release means is provided, co-operating with a stop to end the spacing apart of the sheath (11; 110) and the circumferential locking of the sheath (11; 110) thus triggered in the first bore (9, 10).

2. An articulation according to claim 1, **characterised in that** the counter-bearing element is a first longitudinal section (15), provided inside the sheath (11) arranged behind the first spacing element (13), seen from a first free end of the sheath (11), the longitudinal section of the sheath (11) being fitted with a central opening (16) having an internal thread with reduced threading diameter with respect to the inner diameter of the sheath (11).

3. An articulation according to claim 2, **characterised in that** the sheath (11) is a continuous sheath (11) and that a second bore (9, 10) is provided in the first fixed element (2, 5, 6) with an inner diameter matching the outer diameter, wherein the inner diameter of the second bore (9, 10) and the outer diameter of the sheath (11) are selected so that the first fixed element (2, 5, 6) can rotate with the second bore (9, 10) with respect to the sheath (11). wherein a second (15) is provided inside the sheath (11) and has an inner thread with reduced thread diameter with respect to the inner diameter of the sheath (11) and wherein a second spacing element (13), mobile in a first longitudinal direction of the sheath (11), arranged inside (12) the sheath (11) and seen from a second free end of the sheath (11) upstream of the second longitudinal section (15), which element has a central opening (18) traversed by a locking screw (14) fitted with an outer thread, matching the inner thread of the second longitudinal section (15) of the sheath (11), and a screw head, resting at the second spacing element (13) against the front end of the central opening (19) opposite the second longitudinal section (15) of the sheath (11).

4. An articulation according to claim 3, **characterised in that** the first longitudinal section and the second longitudinal section (15) of the sheath (11) are linked by a single continuous inner thread.

5. An articulation according to any one of claims 2 to 4, **characterised in that** the first longitudinal section and/or the second longitudinal section have, between the inner wall of the sheath (11) delineating the inner diameter, and the inner diameter transversal to the longitudinal extension of the sheath (11), a stop (19) and that in the central opening (18) of the first spacing element and/or of the second spacing element (13) there is provided an inner thread having a thread diameter greater than that of the inner thread in the first longitudinal section (15) of the sheath (11) forming the counter-bearing for tightening a release screwing forming the release means, with the outer thread greater than the inner thread in the central bore (16).

6. An articulation according to claim 1, **characterised in that** the sheath (110) is a continuous sheath (110) and that a second bore (9, 10) is provided in the first fixed element (2, 5, 6) with an inner diameter matching the outer diameter, wherein the inner diameter of the second bore (9, 10) and the outer diameter of the sheath (110) are selected so that the first fixed element (2, 5, 6) may rotate with the second bore (9, 10) with respect to the sheath (110), wherein a second spacing element (131) is provided inside the sheath (110), opposite the first spacing element (130), which second spacing element (131) exhibits a central opening (181) and an inner thread (182) provided in said element, a thread matching the outer thread (141) of the locking screw (140), where the second spacing element (131) forms the counter-bearing.

7. An articulation according to any one of claims 1 to 6, **characterised in that** the locking screw (14; 140) has a heel (144) with enlarged diameter, over a rod section resting on a lateral face of the first spacing element (13; 130) opposite the front face of the first spacing element (13; 130) and at which rests the screw head (142)" which locking screw has a diameter greater than the central opening (18 ; 180) in the first spacing element (13; 130) and exhibits the stop on the side facing the first spacing element (13; 130), wherein the locking screw (14; 140) forms at the same time the release means, with the heel (144).

8. An articulation according to any of the previous claims, **characterised in that** the first spacing element and/or the second spacing element (13; 130, 131) are conical in shape over their whole circumference and the sheath (11; 110) has a conical inner shape matching the circumferential conical shape of the respective spacing element (13; 130, 131), in the regions (12; 120) containing said first spacing element and/or said second spacing element (13; 130, 131).

9. An articulation according to any of the previous claims, **characterised in that** the sheath (11 ; 110) is fitted with longitudinal slits (17; 170, 171) in the wall of the sheath, at the first free end and/or of the second free end.

10. An articulation according to any of the previous claims, **characterised in that** it exhibits at least one second articulation (4) lockable in a pivoted position between two fixed elements (2, 5, 6) and pivotable with respect to a second pivoting axis, which has the features of at least one of the previous claims, in combination with a sheath (11 ; 110) locked at one of the fixed elements, and a bore (9, 110) in the second of the fixed elements (2, 5, 6).

11. A mounting for a welding gun (S) for connecting the welding gun (S) to a welding robot with a first fitting (8) for connection to the arm of the robot and a second fitting (3) for connection to the welding gun (S) and at least one articulation (4) provided between two fixed elements (2, 5, 6) of the mounting (1), pivotable with respect to a first pivoting axis and lockable in a pivoted position, according to any of the previous claims.

## Revendications

1. Articulation (4) prévue entre deux éléments fixes (2, 5, 6) et pivotable autour d'un axe de pivotement et verrouillable dans une position pivotée, pour support (1) de pistolet à souder (S) destiné à être raccordé à un bras d'un robot de soudage, **caractérisée par** une gaine (11; 110) présentant un diamètre interne et un diamètre externe et verrouillée au niveau de l'un des deux éléments fixes (2, 5, 6) et un premier alésage (9, 10) présentant un diamètre interne au niveau du second élément fixe (2, 5, 6), où la gaine (11; 110) est introduite dans le premier alésage (9, 10) et le diamètre interne du premier alésage (9, 10) et le diamètre externe de la gaine (11; 110) sont choisis de telle sorte que le second élément fixe (2, 5, 6) peut tourner avec le premier alésage (9, 10) par rapport à la gaine (11; 110), où un premier élément écarteur (13; 130) est prévu à l'intérieur (12; 120) de la gaine (11; 110), élément écarteur mobile dans la direction longitudinale de la gaine (11; 110), lequel élément présente une ouverture centrale (18; 180), à travers laquelle passe une vis de serrage (14; 140) pourvue d'une section de filetage avec filet externe (141) et une tête de vis (142), qui repose au niveau du premier élément écarteur (13; 130) contre une extrémité frontale de l'ouverture centrale (18; 180), et où un élément de contre-palier (131) est pourvu d'un filet interne (182) correspondant au filet externe (141) pour recevoir par vissage la section de filetage de la vis de serrage (14; 140), où l'on va tourner la vis de serrage (14; 140) dans l'élément de contre-palier (131) pour écarter la gaine (11; 110) et ainsi permettre le serrage périphérique de la gaine (11; 110) dans le premier alésage (9, 10) et où un moyen de libération est prévu, coopérant avec une butée pour arrêter l'écartement de la gaine (11; 110) et le serrage périphérique de la gaine (11; 110) ainsi déclenché dans le premier alésage (9, 10).

2. Articulation selon la revendication 1, **caractérisée en ce que** l'élément de contre-palier est une première section longitudinale (15), prévue à l'intérieur de la gaine (11), disposée derrière le premier élément écarteur (13), vu depuis une première extrémité libre de la gaine (11), section longitudinale de la gaine (11) pourvue d'une ouverture centrale (16), laquelle présente un filet interne avec un diamètre de filet réduit par rapport au diamètre interne de la gaine (11).

3. Articulation selon la revendication 2, **caractérisée en ce que** la gaine (11) est une gaine continue (11) et qu'un second alésage (9, 10) est prévu dans le premier élément fixe (2, 5, 6) avec un diamètre interne correspondant au diamètre externe, où le diamètre interne du second alésage (9, 10) et le diamètre externe de la gaine (11) sont choisis de telle sorte que le premier élément fixe (2, 5, 6) peut tourner avec le second alésage (9, 10) par rapport à la gaine (11), où une seconde section longitudinale (15) est prévue à l'intérieur de la gaine (11) laquelle présente un filet interne avec un diamètre de filet réduit par rapport au diamètre interne de la gaine (11), et où un second élément écarteur (13) mobile dans une première direction longitudinale de la gaine (11), prévue à l'intérieur (12) de la gaine (11) et vue depuis une seconde extrémité libre de la gaine (11), en amont de la seconde section longitudinale (15), lequel élément présente une ouverture centrale (18), à travers laquelle passe une vis de serrage (14) pourvue d'un filet externe, correspondant au filet interne de la seconde section longitudinale (15) de la gaine (11), et d'une tête de vis, qui repose au niveau du second élément écarteur (13) contre l'extrémité frontale de l'ouverture centrale (19) opposée à la seconde section longitudinale (15) de la gaine (11).

4. Articulation selon la revendication 3, **caractérisée en ce que** la première section longitudinale et la seconde section longitudinale (15) de la gaine (11) sont reliées par un seul filet interne continu.

5. Articulation selon l'une quelconque des revendications 2 à 4, **caractérisée en ce que** la première section longitudinale et/ou la seconde section longitudinale présentent entre la paroi interne de la gaine (11) délimitant le diamètre interne, et le diamètre interne transversal à l'étendue longitudinale de la gaine (11), une butée (19) et que dans l'ouverture centrale (18) du premier élément écarteur et/ou du second élément écarteur (13) est prévu un filet interne pourvu d'un diamètre de filet supérieur à celui du filet interne dans la première section longitudinale (15) de la gaine (11) formant le contre-palier pour vissage d'une vis de libération constituant le moyen de libération, avec le filet externe plus grand que le filet interne dans l'alésage central (16).

6. Articulation selon la revendication 1 **caractérisée en ce que** la gaine (110) est une gaine continue (110) et qu'un second alésage (9, 10) est prévu dans le premier élément fixe (2, 5, 6) avec un diamètre interne correspondant au diamètre externe, où le diamètre interne du second alésage (9, 10) et le diamètre externe de la gaine (110) sont choisis de telle sorte que le premier élément fixe (2, 5, 6) peut tourner avec le second alésage (9, 10) par rapport à la gaine (110), où un second élément écarteur (131) est prévu à l'intérieur de la gaine (110), opposé au premier élément écarteur (130), lequel second élément écarteur (131) présente une ouverture centrale (181) et un filet interne (182) pratiqué dans ledit élément, filet correspondant au filet externe (141) de la vis de serrage (140), où le second élément écarteur (131) constitue le contre-pal ier.

7. Articulation selon l'une quelconque des revendications 1 à 6, **caractérisée en ce que** la vis de serrage (14; 140) présente un talon (144) au diamètre agrandi, sur une section de tige reposant sur une face latérale du premier élément écarteur (13; 130), face opposée à la face frontale du premier élément écarteur (13; 130) et au niveau de laquelle repose la tête de vis (142), laquelle vis de serrage est d'un diamètre supérieur à l'ouverture centrale (18 ; 180) dans le premier élément écarteur (13; 130) et présente la butée sur le côté faisant face au premier élément écarteur (13; 130), où la vis de serrage (14; 140) constitue en même temps le moyen de libération, avec le talon (144).

8. Articulation selon l'une quelconque des revendications précédentes, **caractérisée en ce que** le premier élément écarteur et/ou le second élément écarteur (13; 130, 131) sont de forme conique sur tout leur périmètre et que la gaine (11; 110) présente une forme interne conique correspondant à la forme conique circonférentielle de l'élément écarteur (13; 130, 131) respectif, dans les zones (12; 120) contenant ledit premier élément écarteur et/ou ledit second élément écarteur (13; 130, 131).

9. Articulation selon l'une quelconque des revendications précédentes, **caractérisée en ce que** la gaine (11 ; 110) est pourvue de fentes longitudinales (17; 170, 171) dans la paroi de la gaine, au niveau de la première extrémité libre et/ou de la seconde extrémité libre.

10. Articulation selon l'une quelconque des revendications précédentes, **caractérisée en ce qu'**elle présente au moins une seconde articulation (4) verrouillable dans une position pivotée entre deux éléments fixes (2, 5, 6) et pivotable par rapport à un second axe de pivotement, qui présente les caractéristiques d'au moins l'une des revendications précédentes, en combinaison avec une gaine (11 ; 110) verrouillée au niveau de l'un des éléments fixes, et un alésage (9, 10) dans le second des éléments fixes (2, 5, 6).

11. Support de pistolet à souder (S) pour raccordement du pistolet à souder (S) à un bras d'un robot de soudage avec un premier raccordement (8) pour assurer la liaison avec le bras de robot et un second raccordement (3) pour assurer la liaison avec le pistolet à souder (S) et au moins une articulation (4) prévue entre deux éléments fixes (2, 5, 6) du support (1), pivotable par rapport à un premier axe de pivotement et verrouillable dans une position pivotée, selon l'une des revendications précédentes.
